# EUROPEAN PATENT SPECIFICATION

(11) **EP 2 988 650 B1**
(45) Date of publication and mention of the grant of the patent: **25.10.2017**
(21) Application number: 14731019.7
(22) Date of filing: 23.04.2014
(51) Int. Cl.: A47L 15/42

(54) **SYSTEM FOR SUPPLYING AND TREATING WATER FOR A DISHWASHER**
SYSTEM ZUR ZUFÜHRUNG UND AUFBEREITUNG VON WASSER FÜR EINE GESCHIRRSPÜLMASCHINE
SYSTÈME D'ALIMENTATION ET DE TRAITEMENT DE L'EAU POUR UN LAVE-VAISSELLE

(30) Priority: 24.04.2013 IT TO20130339
(43) Date of publication of application: 02.03.2016
(73) Proprietor: Bitron S.p.A., 10122 Torino (TO) (IT)
(72) Inventor: BRIGNONE, Enzo, I-12025 Frazione Monastero Dronero (Cuneo) (IT)
(74) Representative: Quinterno, Giuseppe
(86) International application number: PCT/IB2014/060930
(87) International publication number: WO 2014/174452

(56) References cited:
- EP-A1- 0 094 357
- EP-A1- 0 517 205
- EP-A1- 0 741 991
- EP-A1- 1 114 607
- EP-A1- 2 561 790
- DE-A1- 10 027 844
- DE-U1- 29 613 016

## Description

The present invention relates in general to the field of washing machines, and in particular to dishwashers.

More specifically, the present invention relates to a system for supplying and treating water for a dishwasher, of the type defined in the preamble of the appended Claim 1.

A system for supplying and treating water of the type specified above is known, for example, from European Patent Application EP 2 561 790 A1, in the name of the present applicant.

DE 296 13 016 U1 describes a control system for a water softener of a dishwasher, comprising indicator means settable by the user to indicate the hardness of the water for the purpose of controlling and varying, as a function of the indicated hardness of the water, the quantity of water used for forming the regenerating brine and for washing the water-softening substances after regeneration.

EP 0 517 205 A1 describes a water softener in which the frequency of the regeneration operation is variable as a function of the hardness of the water.

EP 1 114 607 A1 describes a water softener which, for a standard dishwasher for twelve table settings, comprises at least 400 cc of water-softening resins.

In a dishwasher, as is known, in order to reduce the hardness of the water available at the place of use, the water used for washing the dishes is brought into contact with substances having water-softening properties, such as ion-exchange resins.

These substances or resins must be periodically regenerated by a flow of brine formed by passing a certain quantity of water through the salt tank. This quantity of water can be controlled in various ways, for example by providing a suitable collecting container having a predetermined appropriate volume, or by measuring it with a flow meter, or by opening an electric valve for a predetermined time interval, or alternatively by using a pressure sensor placed in a well that forms the base of the washing chamber.

In washing machines, and particularly in dishwashers, the reduction of water consumption is becoming increasingly important.

This mainly requires a reduction of the quantity of water used for washing.

However, it is also possible to make an appreciable contribution in this direction by reducing the quantities of water used for the regeneration of the water-softening resins and for the washing of these resins after each regeneration operation.

This is because the regeneration of the softening resins generally requires quantities of water of the order of 100 - 200 cc, and the subsequent washing of these resins may require quantities of water of the order of 1500 cc.

One object of the present invention is therefore, to propose a system for supplying and treating water which can contribute to the achievement of this aim, by enabling the consumption of water and electricity to be reduced appreciably.

A further object of the present invention is to propose a system for supplying and treating water which enables costs to be reduced appreciably by reducing the quantity of water-softening substances used and the quantity of salt required on each occasion for their regeneration.

These and other objects are achieved according to the invention with a system for supplying and treating water of the type defined above, having the characteristics defined in the attached Claim 1.

Conveniently, in this system the electronic control means may be designed to cause, through the aforesaid electric valve means, the performance of the operations of regeneration and washing of the softening substances with a frequency at least equal to two washing cycles of the machine, when the water hardness indicated by said indicator means lies within a first predetermined range of relatively low values, for example from 10 to 20 German degrees (°d).

Said electronic control means may be designed to cause, through the electric valve means, the performance of an operation of regeneration and washing of the softening substances in each washing cycle of the machine, with quantities of water for the formation of the brine and for the washing of the softening substances increasing in predetermined ways with an increase in the water hardness indicated by the aforesaid indicator means, when the indicated hardness lies within a second predetermined range of values which are relatively high and greater than the values of said first range. This second range of values of water hardness may extend, for example, from about 20 German degrees upwards.

According to a further characteristic, a system for supplying and treating water according to the present invention intended for use in a dishwasher capable of washing 12 table settings has a quantity of not more than 400 cc of ion-exchange softening substances, having an exchange capacity of about 1.9 eq/l.

The quantity of water-softening substances contained in the tank 24 is generally substantially equal to 33.2 x 12, divided by the number of table settings that can be washed by the machine.

In this context, the number of table settings is determined according to the standard EN 50242.

Conveniently, the product of the quantity of water-softening resins, expressed in cc, and the ion-exchange capacity of these resins, expressed in eq/litre, is substantially equal to 760.

Typically, the aforesaid first tank has an at least approximately cylindrical shape. If this tank has a cross section with an average area S (expressed in mm², for example) and a height h (expressed in mm), the ratio S/h is conveniently between about 20 and about 55.

Further characteristics and advantages of the present invention will be apparent from the following detailed description, provided purely by way of non-limiting example, with reference to the attached drawings, in which:
Figure 1 is a schematic representation of a system according to the present invention, shown in a step of the softening treatment of the water used for washing the dishes, and
Figure 2 is a schematic representation of the system of Figure 1, shown in a step of regeneration of the softening substances.

In the drawings, the number 1 indicates the whole of a system for supplying and treating water according to the present invention, in particular for a dishwasher of a known type (not illustrated).

This system 1 comprises a water-softening device which is indicated as a whole by 2, and which will now be described in detail.

In the embodiment illustrated by way of example in the drawings, the water-softening device 2 has a supply line 10, having an upstream portion in which an electric filling valve 12 and a flow gauge 14 are fitted.

The supply line 10 then has an air gap portion 16.

Downstream of the latter, the line 10 has a branch-off point 18 at which it forms a first and a second branch indicated by 20 and 22 respectively.

The water-softening device 2 further comprises a first tank 24 for containing substances with softening properties, in particular ion-exchange resins. This tank 24 has an inlet opening 26 for a flow of water to be softened and an outlet opening 28 for the flow of softened water.

The number 30 indicates a second tank for containing salt. This tank 30 has a water inlet opening 32 and an outlet opening 34 for a regenerating brine formed following the dissolution of salt in the water.

A line 36, in which a one-way valve 37 is positioned, connects the second tank 30 to the first tank 24, to enable the brine formed in the second tank 30 to flow out towards the first tank 24.

The first branch 20 of the supply line 10 is connected to the inlet opening 26 of the first tank 24, while the second branch 22 is connected to the inlet opening 32 of the second tank 30.

In the embodiment illustrated by way of example, a switching valve 38, particularly an electric valve, is located at the branch-off point 18 of the supply line 10. This valve could also be placed at the point of entry of the branch 20 into the container 24, or immediately upstream of this container 24.

The valve 38 has a shutter 39 adapted to cause water to flow into the first branch 20 or the second branch 22, by closing the free aperture of a first or a second valve seat 40a, 40b which forms the inlet of the corresponding branch 20, 22.

The valve 38 further comprises a calibrated supplementary passage 42, which puts the supply line 10 constantly into communication with the first branch 20, independently of the position of the shutter 39.

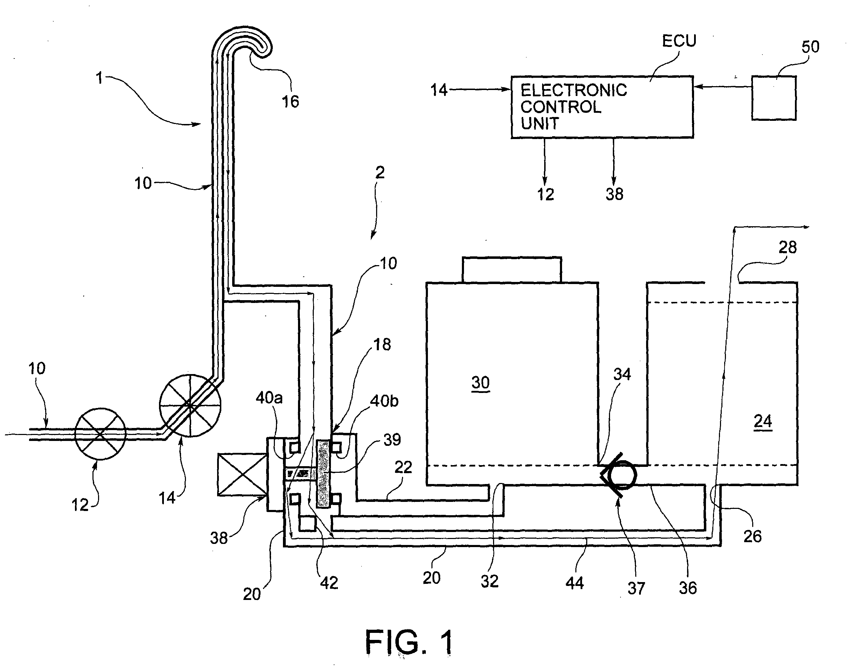

During the step of softening treatment of the supplied water (Figure 1), the shutter 39 of the valve 38 assumes a first operating position in which it blocks the outflow from the supply line 10 towards the second branch 22, by closing the aperture of the seat 40b, while it allows the flow into the first branch 20 towards the first tank 24 through the aperture of the seat 40a.

Thus all of the water flowing in the line 10 is directed, through the aperture of the seat 40a or the passage 42, directly into the first branch 20 and then into the first tank 24, where it is softened, as illustrated by the path indicated by 44 in Figure 1.

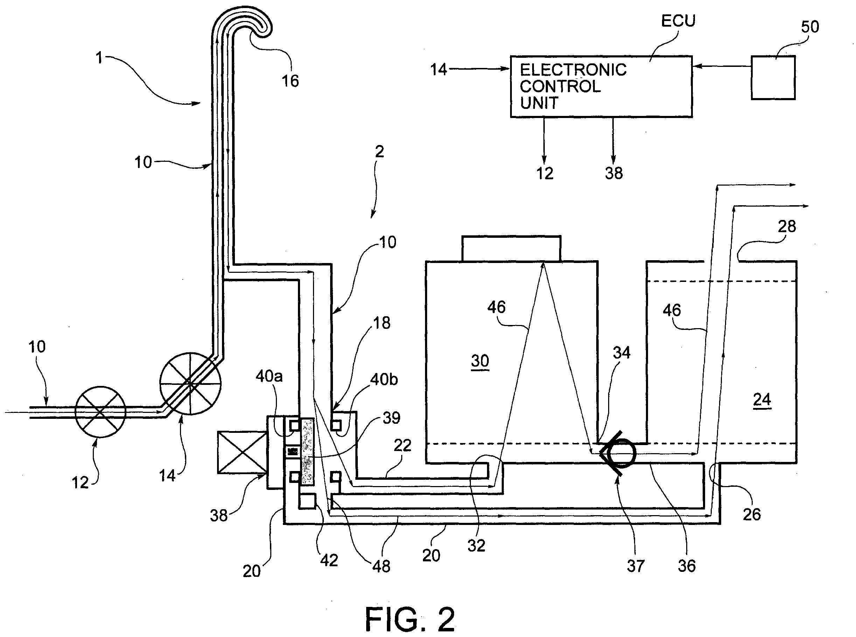

During the step of regeneration of the softening substances (Figure 2), the shutter 39 of the valve 38 assumes a second operating position in which it allows the flow of water from the supply line 10 towards the second branch 22, by closing the aperture of the seat 40a and leaving open the aperture of the seat 40b.

Thus the water supplied to the second branch 22 is directed into the second tank 30, where it forms a brine which, when it subsequently passes through the first tank 24, regenerates the softening substances (see the path indicated by 46 in Figure 2).

In the embodiment illustrated in the drawings, even during the regeneration step in which the shutter 39 closes the aperture of the inlet seat 40a of the first branch 20, part of the flow of supplied water continues to be directed through the passage 42 into the first branch 20 and thence into the first tank 24 (see the path indicated by 48 in Figure 2). This prevents the passage of the whole supply flow through the salt tank 30, which would be functionally unnecessary and could also cause dangerous blockages.

It should also be noted that the ratio between the flows of water in the first and second branches 20, 22 depends on the apertures of the passage 42 and of the seats 40a, 40b, that is to say on fixed geometrical values, which can be specified with very high precision and low tolerances, thus providing highly precise operation.

In the embodiment described above, the quantities of water used for washing the dishes, forming the regenerating brine and washing the softening substances after the regenerating operations are determined by means of the flow gauge 14.

The use of a flow rate gauge is of some importance, because it enables the frequency of the regeneration operations to be determined as a function of the quantity of water actually introduced into the dishwasher for washing, which depends not only on the washing cycle selected, but also on the quantity of dishes loaded into the machine. Thus it is also feasible to reduce the quantity of water-softening resins used by performing two or more regeneration operations per washing cycle when the water hardness is very high and/or the washing cycle requires the use of a rather large quantity of water.

It is also possible to provide variant embodiments in which, for example, the volume of water used for forming the regenerating brine is determined differently, for example by means of a suitable collecting container having a predetermined volume, or by opening an electric water flow control valve for predetermined time intervals, or by measuring the quantity of water in the base well of the washing chamber or vessel.

The system for supplying and treating water 1 further comprises an indicator device 50 of a known type, adapted to supply signals or data indicative of the hardness of the water used.

The system 1 further comprises an electronic control unit ECU connected to the indicator device 50 and to the flow gauge 14, as well as to the electric valves 12 and 38.

The electronic control unit ECU may be made as a unit specifically dedicated to the system for supplying and treating water 1, or its functions may be implemented using an electronic control unit of the machine with which the system for supplying and treating water 1 is associated.

This control unit ECU is designed to control selectively, in predetermined ways, as a function of the hardness of the water used, indicated by the device 50, and through the electric valves 12 and 38:
- the quantity of water used for forming the brine used for each operation of regenerating the softening substances contained in the tank 24;
- the quantity of water used for washing the softening substances contained in the tank 24, after each regeneration operation; and
- the frequency of the operations of regenerating and washing these water-softening substances.

By means of the coordinated control of two or more of these parameters, the system for supplying and treating water according to the invention makes it possible to achieve the objects mentioned in the introduction to the present description.

In particular, the electronic control unit ECU may conveniently be designed to cause, through the valves 12 and 38, the performance of operations of regeneration and washing of the softening substances contained in the tank 24, with a frequency at least equal to two washing cycles in the machine, when the water hardness indicated by the device 50 lies within a first predetermined range of relatively low values, for example between about 10 and about 20 German degrees. In these conditions, the control unit ECU may conveniently be designed so as to cause the supply of fixed predetermined quantities for the purposes, respectively, of forming the brine and washing the resins after regeneration.

The electronic control unit ECU may also be conveniently designed to cause, through the electric valves 12 and 38, the performance of an operation of regeneration and washing of the softening substances in each washing cycle of the machine, with quantities of water for the formation of the brine and for the washing of the softening substances increasing in predetermined ways with an increase in the water hardness indicated by the indicator 50, when the indicated hardness lies within a second predetermined range of values which are relatively high and greater than the values of the aforesaid first range. This second range of values of water hardness conveniently extends, for example, from about 20 German degrees upwards.

The volume of softening resins used is a crucial factor in the optimization of operating efficiency and the consequent reduction of water and salt consumption for the operations of regenerating the softening substances, as well as energy consumption and costs.

According to a further aspect of the invention, for a dishwasher capable of washing 12 table settings, the first tank 24, that is to say the tank for the softening substances, has an internal volume capable of containing a volume of not more than 400 cc of ion-exchange softening substances, having an exchange capacity of about 1.9 eq/l.

The tank 24 generally has an at least approximately cylindrical shape. If, as mentioned above, this tank has a cross section having an average area S and a height h expressed in consistent units of measurement (mm² and mm respectively), the ratio S/h is conveniently between about 20 and about 55.

A ratio S/h between these extremes provides high operating efficiency, a reduction of water consumptions and a reasonable compromise between performance/pressure drop requirements and the requirement to reduce the quantity of softening resins used.

Clearly, provided that the principle of the invention is retained, the forms of application and the details of embodiment can be varied widely from what has been described and illustrated purely by way of non-limiting example, without thereby departing from the scope of protection of the invention as defined by the attached claims.

## Claims

1. System for supplying and treating water for a dishwasher, comprising:
- a first tank (24) for containing substances with water-softening properties, having at least one inlet opening (26) for water to be softened and an outlet opening (28) for softened water,
- a second salt-containing tank (30), having at least one water inlet opening (32) and an outlet opening (34) for a regenerating brine formed following the dissolution of the salt in the water,
- a line (36) connecting the second tank (30) to the first tank (24) for the outflow of the brine formed in the second tank (30) towards the first tank (24),
- a water supply line (10) having a branch-off point (18) into a first branch (20) supplying the first tank (24) and into a second branch (22) which leads to the inlet opening (32) of the second tank (30),
- first electric valve means (12) adapted to control the flow of water through said supply line (10),
- second electric valve means (38) adapted to control a flow of water towards and through the second tank (30) for forming the regenerating brine,
- means (14) for determining the amounts of water used for washing the dishes, forming the regenerating brine and washing the softening substances after a regenerating operation; and
- electronic control means (ECU) connected to said determining means (14) and to said first and second electric valve means (12, 38); the system being **characterized in that** said system further comprises indicator means (50) adapted to provide signals or data indicative of the hardness of the water used, and **in that** the control means (ECU) are designed to control, and if necessary selectively vary, in predetermined ways, as a function of the water hardness indicated by the indicator means (50), and through said first and second electric valve means (12, 38), at least two of the following parameters of the regeneration of said water-softening substances:
* the quantity of water used for forming the brine used for each operation of regenerating the softening substances contained in said first tank (24),
* the quantity of water used for washing the softening substances after each regeneration operation, and
* the frequency of the operations of regenerating and washing said softening substances.

2. System according to Claim 1, for a machine designed to wash at least twelve table settings, in which the ratio between the quantity of water-softening substances, expressed in cc, and the number of table settings that can be washed by the machine is in the range from 33.2 to 15.

3. System according to Claim 1 or 2, in which, for a dishwasher capable of washing up to twelve table settings, said first tank (24) contains ion-exchange softening resins having an exchange capacity of about 1.9 eq/litre, in a quantity in the range from 180 cc to 400 cc.

4. System according to any one of the preceding claims, wherein said first tank (24) has an at least approximately cylindrical shape, with a cross section having an average area S, in mm², and a height h, in mm, such that the S/h ratio is between about 20 and about 55.

5. System according to any one of the preceding claims, in which the product of the quantity of water-softening substances expressed in cc and the ion-exchange capacity of said substances expressed in eq/litre is substantially equal to 760.

6. System according to any one of the preceding claims, in which the quantity of water-softening substances contained in said first tank (24) is substantially equal to 33.2 multiplied by 12, divided by the number of table settings that can be washed by the machine.

7. System according to any one of the preceding claims, in which the electronic control means are designed to cause the performance of a plurality of regeneration operations per washing cycle when the hardness of the water exceeds a predetermined value and/or the quantity of water used in the washing cycle exceeds a predetermined volume.

## Patentansprüche

1. System zum Zuführen und Behandeln von Wasser für eine Spülmaschine, umfassend:
- einen ersten Tank (24) zum Aufnehmen von Substanzen mit wasserweichmachenden Eigenschaften, der mindestens eine Einlassöffnung (26) für weich zu machendes Wasser und eine Auslassöffnung (28) für weich gemachtes Wasser aufweist,
- einen zweiten, Salz-enthaltenden Tank (30), der mindestens eine Wassereinlassöffnung (32) und eine Auslassöffnung (34) für eine regenerierende Kochsalzlösung aufweist, die nach dem Lösen des Salzes in dem Wasser gebildet worden ist,
- eine Leitung (36), die den zweiten Tank (30) mit dem ersten Tank (24) für das Ausströmen der Kochsalzlösung, die in dem zweiten Tank (30) gebildet worden ist, zu dem ersten Tank (24) verbindet,
- eine Wasserzuführungsleitung (10), die einen Verzweigungspunkt (18) in eine erste Verzweigung (20), die den ersten Tank (24) versorgt, und in eine zweite Verzweigung (22), die zu der Einlassöffnung (32) des zweiten Tanks (30) führt, aufweist,
- eine erste elektrische Ventileinrichtung (12), die zum Steuern des Wasserstroms durch die Zuführungsleitung (10) angepasst ist,
- eine zweite elektrische Ventileinrichtung (38), die zum Steuern eines Wasserstroms zu dem und durch den zweiten Tank (30) zum Bilden der regenerierenden Kochsalzlösung angepasst ist,
- eine Einrichtung (14) zum Bestimmen der Mengen von Wasser, die zum Spülen des Geschirrs, zum Bilden der regenerierenden Kochsalzlösung und zum Auswaschen der weichmachenden Substanzen nach einem Regenerierungsvorgang verwendet werden; und
- eine elektronische Steuereinrichtung (ECU), die mit der Bestimmungseinrichtung (14) und mit der ersten und der zweiten elektrischen Ventileinrichtung (12, 38) verbunden ist;
wobei das System **dadurch gekennzeichnet ist, dass** das System ferner eine Anzeigeeinrichtung (50) umfasst, die zum Bereitstellen von Signalen oder Daten angepasst ist, welche die Härte des verwendeten Wassers angeben, und dadurch, dass die Steuereinrichtung (ECU) so ausgebildet ist, dass sie als Funktion der Wasserhärte, die durch die Anzeigeeinrichtung (50) angegeben wird, und durch die erste und die zweite elektrische Ventileinrichtung (12, 38) mindestens zwei der folgenden Parameter der Regenerierung der wasserweichmachenden Substanzen auf vorgegebene Arten steuert und gegebenenfalls selektiv variiert:
* die Menge des Wassers, das zur Bildung der Kochsalzlösung verwendet wird, die für jeden Vorgang des Regenerierens der weichmachenden Substanzen, die in dem ersten Tank (24) enthalten sind, verwendet wird,
* die Menge des Wassers, das zum Auswaschen der weichmachenden Substanzen nach jedem Regenerierungsvorgang verwendet wird, und
* die Häufigkeit der Vorgänge des Regenerierens und des Auswaschens der weichmachenden Substanzen.

2. System nach Anspruch 1 für eine Maschine, die zum Spülen von mindestens zwölf Tischgedecken ausgebildet ist, wobei das Verhältnis zwischen der Menge der wasserweichmachenden Substanzen, ausgedrückt in cm³, und der Anzahl von Tischgedecken, die durch die Maschine gespült werden können, im Bereich von 33,2 bis 15 liegt.

3. System nach Anspruch 1 oder 2, bei dem für eine Spülmaschine, die bis zu zwölf Tischgedecke spülen kann, der erste Tank (24) ionenaustauschende weichmachende Harze mit einem Austauschvermögen von etwa 1,9 Äquivalenten/Liter in einer Menge im Bereich von 180 cm³ bis 400 cm³ enthält.

4. System nach einem der vorhergehenden Ansprüche, bei dem der erste Tank (24) mindestens eine angenäherte zylindrische Form aufweist, wobei ein Querschnitt eine durchschnittliche Fläche S in mm² und eine Höhe h in mm derart aufweist, dass das S/h-Verhältnis zwischen etwa 20 und etwa 55 beträgt.

5. System nach einem der vorhergehenden Ansprüche, bei dem das Produkt aus der Menge von wasserweichmachenden Substanzen in cm³ und dem Ionenaustauschvermögen der Substanzen in Äquivalenten/Liter im Wesentlichen gleich 760 ist.

6. System nach einem der vorhergehenden Ansprüche, bei dem die Menge von wasserweichmachenden Substanzen, die in dem ersten Tank (24) enthalten sind, im Wesentlichen gleich 33,2 multipliziert mit 12, dividiert durch die Anzahl von Tischgedecken ist, die durch die Maschine gespült werden können.

7. System nach einem der vorhergehenden Ansprüche, bei dem die elektronische Steuereinrichtung so ausgebildet ist, dass das Leistungsvermögen für eine Mehrzahl von Regenerationsvorgängen pro Spülzyklus bewirkt wird, wenn die Härte des Wassers einen vorgegebenen Wert übersteigt und/oder die Menge des in dem Spülzyklus verwendeten Wassers ein vorgegebenes Volumen übersteigt.

## Revendications

1. Système d'alimentation et de traitement de l'eau pour un lave-vaisselle, comprenant :
- un premier réservoir (24) pour contenir des substances ayant des propriétés d'adoucissement de l'eau, ayant au moins un orifice d'entrée (26) pour l'eau devant être adoucie et un orifice de sortie (28) pour l'eau adoucie,
- un second réservoir contenant du sel (30), ayant au moins un orifice d'entrée d'eau (32) et un orifice de sortie (34) pour une saumure de régénération formée suite à la dissolution du sel dans l'eau,
- un conduit (36) reliant le second réservoir (30) au premier réservoir (24) pour l'écoulement de la saumure formée dans le second réservoir (30) vers le premier réservoir (24),
- un conduit d'alimentation d'eau (10) ayant un point de bifurcation (18) en une première ramification (20) alimentant le premier réservoir (24) et en une seconde ramification (22) qui conduit à l'orifice d'entrée (32) du second réservoir,
- des premiers moyens d'électrovanne (12) adaptés pour réguler le débit d'eau à travers ledit conduit d'alimentation (10),
- des seconds moyens d'électrovanne (38) adaptés pour réguler un débit d'eau vers et à travers le second réservoir (30) pour former la saumure régénérante,
- des moyens (14) pour déterminer les quantités d'eau utilisées pour laver la vaisselle, former la saumure régénérante et laver les substances adoucissantes après une opération de régénération ; et
- des moyens de contrôle électroniques (ECU) connectés auxdits moyens de détermination (14) et auxdits premiers et seconds moyens d'électrovanne (12, 38) ;
le système étant **caractérisé en ce que** ledit système comprend en outre des moyens d'indication (50) adaptés pour fournir des signaux ou des données indicatifs de la dureté de l'eau utilisée, et **en ce que** les moyens de contrôle (ECU) sont conçus pour contrôler, et si nécessaire pour faire varier sélectivement, de manières prédéterminées, en fonction de la dureté de l'eau indiquée par les moyens d'indication (50), et par le biais desdits premiers et seconds moyens d'électrovanne (12, 38), au moins deux des paramètres suivants de la régénération desdites substances d'adoucissement de l'eau :
* la quantité d'eau utilisée pour former la saumure utilisée pour chaque opération de régénération des substances adoucissantes contenues dans ledit premier réservoir (24),
* la quantité d'eau utilisée pour laver les substances adoucissantes après chaque opération de régénération, et
* la fréquence des opérations de régénération et de lavage desdites substances adoucissantes.

2. Système selon la revendication 1, pour une machine conçue pour laver au moins douze couverts, dans lequel le rapport entre la quantité de substances d'adoucissement de l'eau, exprimé en cm³, et le nombre de couverts qui peuvent être lavés par la machine est dans la plage de 33,2 à 15.

3. Système selon la revendication 1 ou 2, dans lequel, pour un lave-vaisselle capable de laver jusqu'à douze couverts, ledit premier réservoir (24) contient des résines adoucissantes échangeuses d'ions ayant une capacité d'échange d'environ 1,9 éq/litre, dans une quantité dans la plage de 180 cm³ à 400 cm³.

4. Système selon l'une quelconque des revendications précédentes, dans lequel ledit premier réservoir (24) a une forme au moins approximativement cylindrique, avec une coupe transversale ayant une surface moyenne S, en mm², et une hauteur h, en mm, de telle sorte que le rapport S/h est compris entre environ 20 et environ 55.

5. Système selon l'une quelconque des revendications précédentes, dans lequel le produit de la quantité de substances d'adoucissement de l'eau exprimée en cm³ et de la capacité d'échange d'ions desdites substances exprimée en éq/litre est sensiblement égal à 760.

6. Système selon l'une quelconque des revendications précédentes, dans lequel la quantité de substances d'adoucissement de l'eau contenue dans ledit premier réservoir (24) est sensiblement égale à 33,2 multiplié par 12, divisé par le nombre de couverts qui peuvent être lavés par la machine.

7. Système selon l'une quelconque des revendications précédentes, dans lequel les moyens de contrôle électroniques sont conçus pour provoquer l'exécution d'une pluralité d'opérations de régénération par cycle de lavage lorsque la dureté de l'eau dépasse une valeur prédéterminée et/ou la quantité d'eau utilisée dans le cycle de lavage dépasse un volume prédéterminé.
